# EUROPEAN PATENT APPLICATION

(11) **EP 0 849 547 A2**
(43) Date of publication of application: **24.06.1998**
(21) Application number: 97122362.3
(22) Date of filing: 18.12.1997
(51) Int. Cl.: F24H 8/00, F24H 3/06

(54) **Fuel-fired heating system**

(30) Priority: 19.12.1996 IT MI002671
(71) Applicant: Piazzalunga, Claudio, Bellinzago Novarese, NO (IT)
(72) Inventor: Piazzalunga, Claudio, Bellinzago Novarese, NO (IT)
(74) Representative: Savi, Alberto

(57) **Abstract**

This invention concerns a fuel-fired heating system (1) for generating hot air, characterised by the fact that it also includes a heat exchanger (22, 23) to recover heat from the combustion gases.

## Description

The object of this invention is a fuel-fired heating system, in particular one equipped with a hot air distribution system.

As known, a fuel-fired heating system consists essentially of a hollow body housing a combustion chamber.

The heat generated in said combustion chamber is then given off either directly through the housing of the system, or indirectly through an appropriate hot fluid distribution circuit.

For example, if the system is designed to generate hot air, metallic conductors for passing the heated air will be provided in contact with the housing of the combustion chamber.

These systems further differ based on the type of fuel employed, which may be of a solid, liquid or gaseous nature.

Based on the existing technology, the structure of these systems generally consists of cast-iron elements connected by studs or similar devices.

However, the fuel-fired heating systems in present production exhibit a number of drawbacks.

The temperature gradient produced in the system's cast iron structure induces harmful stresses in the material at the junctions between the various structural elements.

This leads, with the passing of time, to frequent breakages of the cast iron elements, thus requiring replacement.

Moreover, if the system is used for generating hot air, a thoroughly unsatisfactory thermal performance results.

Again, if the system is fed with a solid fuel, the poor thermal capacity of metallic ovens demands that the combustion chamber be constantly and carefully supplied.

A further drawback of solid fuel-fired system is the difficulty of igniting the charge.

Additional problems are also encountered in opening the system to admit solid fuels.

The scope of this invention is to offer an improved heating system.

According to one of the features of this invention, a fuel-fired heating system is envisioned as specified under claim 1.

One of the forms of executing this invention is as described below, merely as an example with reference to the enclosed drawings, in which :

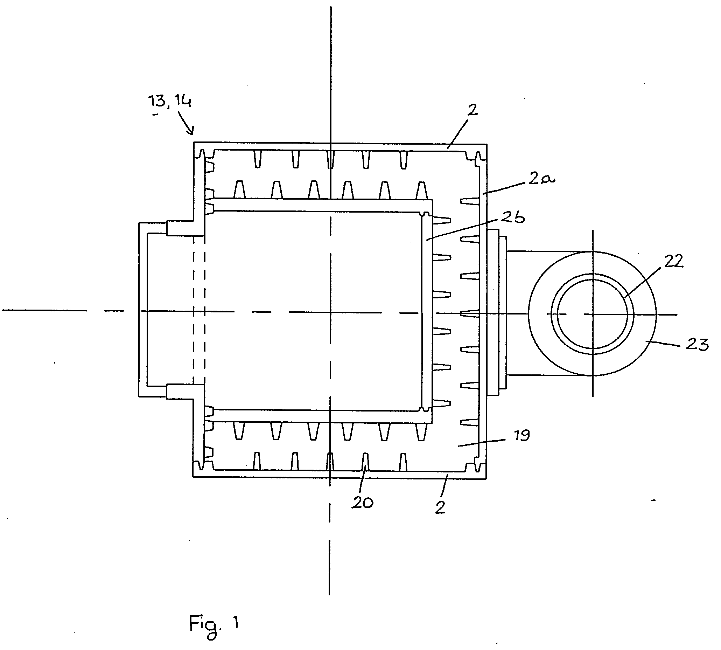

- Figure 1 is a simplified sectional top view of a heating system according to the invention,

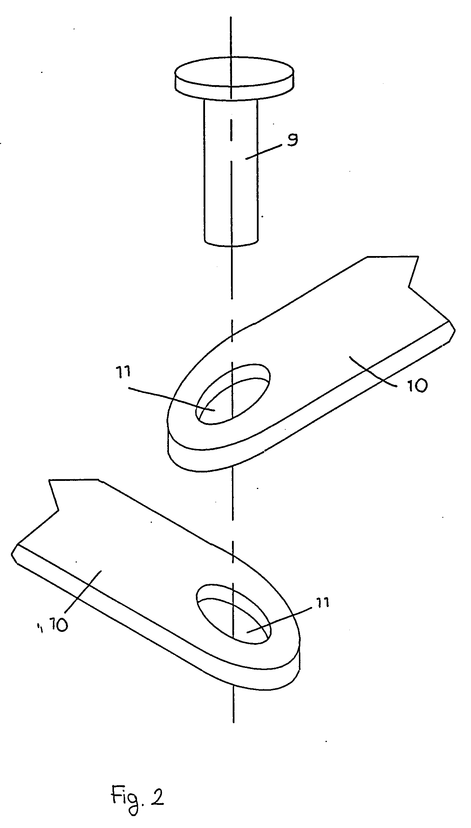

- Figure 2 is an enlarged prospective view of a detail of the system according to the invention,

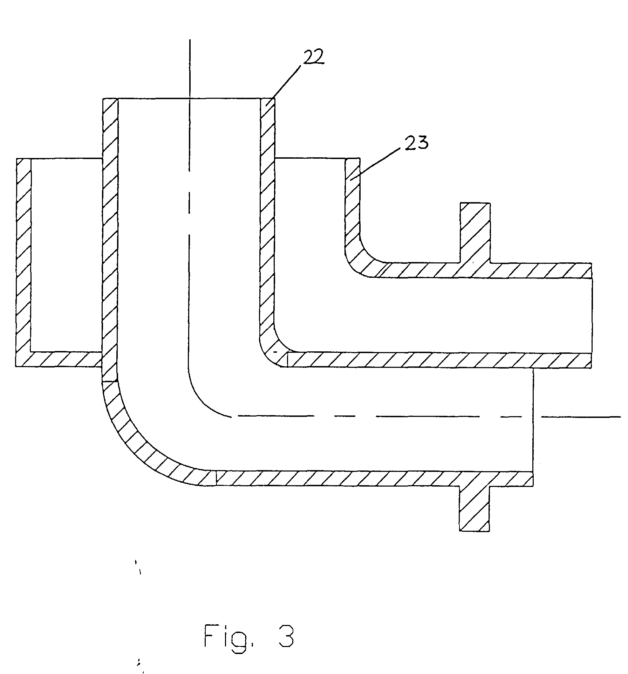

- Figure 3 is sectional side view of a detail of the system according to the invention,

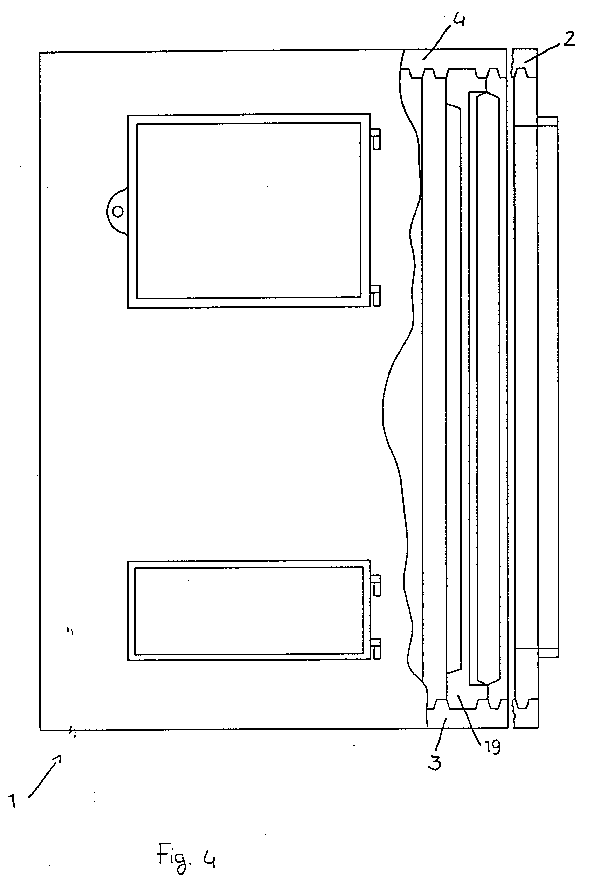

- Figure 4 is a sectional front view of the system according to the invention,

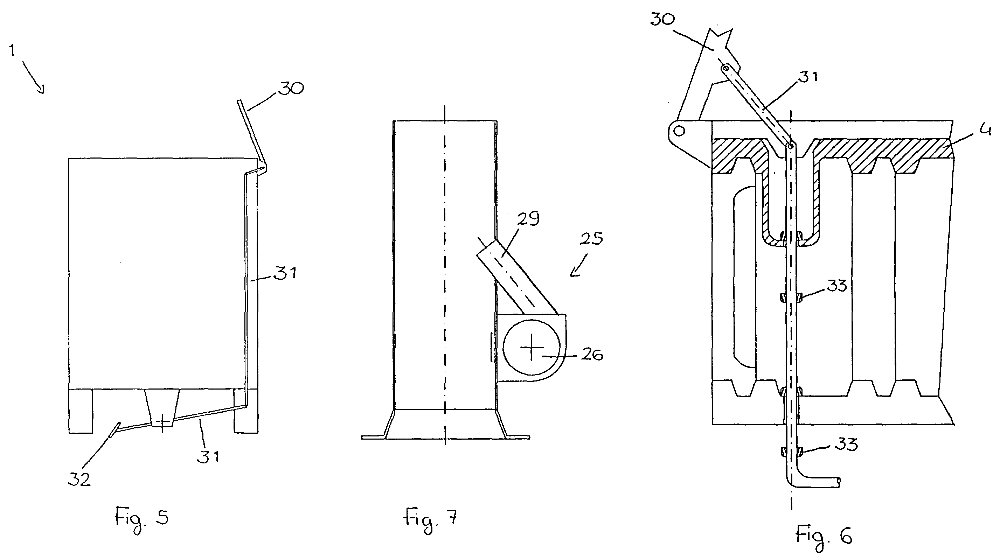

- Figure 5 is a partially sectionalised side view of the system according to another form of execution of the invention,
- Figure 6 is a side view of an additional potential form of execution of the invention, and
- Figure 7 is a partially sectionalised side view of a final potential form of execution of the invention.

Under reference to the enclosed drawings, the overall heating system designated by the number 1 comprises a variety of structural elements and modules, and in particular:
a base 3, a number of vertical walls 2 and a head section 4, jointly defining a cavity housing the combustion chamber.

On of the features of the invention is that the the junction of at least some of the mentioned elements is achieved by connecting pins or studs (9).

For this purpose, the walls (2, 3, 4) are equipped with appropriate projections 10, providing eyelets for the joints 11.

In this manner, the walls 2,3, and 4 may smoothly absorb any shifts in a direction parallel to the axis of the stud 9.

Due to the fact that the effects of thermal expansion are greater in the sense of the larger dimension of the wall, the mentioned studs 9 will preferably be positioned in a manner parallel to this direction.

In order to compensate for any motions occurring at right angles to the axis of the sud (9), the junction eyelets 11 will have an appropriately oversized diameter.

The use of these studs 9 therefore allows to drastically reduce the breakage problems typically associated with these systems.

It should be further noted that the use of these studs 9 makes it possible to cut back on ther overall time required for assembling the system.

In order to achieve a proper tightness of the combustion chamber, certain materials well known to any specialist in the trade, such as refractory materials or hanks of alumina may be applied.

To ensure a proper tightness on the contact surfaces of the walls, the mentioned surface may also have a toothed profile.

In this case it will be important that the grooves 13 and projections 14 be parallel to the axis of the studs 9, so as not hamper the relative motions in a sense parallel to the mentioned axis.

These projections 14 will freely engage in the grooves 13, so as to allow even tiny relative shifts to occur at a right angle to the direction of the grooves.

It should be noted that these projections and grooves facilitate the assembling task, by aiding the proper positioning of the modules in questions.

Also note that these grooved profiles contribute to the strength of the structure built in this manner.

In the form of execution depicted here, the system is specifically conceived as a warm air generating unit.

For this purpose, three of the four vertical walls are actually formed by a pair of walls (2a, 2b) detached from each other in such a manner as to form a hollow space 19 to pass the air to be heated.

Of course, even the fourth vertical wall 2 and/or the head section 3 may be constructed in the same manner.

In order to enhance the heat transfer, the internal wall 2b is fitted on the side of the hollow space 19 with suitable fins 20 or similar devices to increase to heat exchange surface.

In one potential form of execution, the external walls 2a may be coated on the side of the hollow space 19 with a refractory material, so as to boost the system's thermal capacity without penalising the combustion chamber's heat transfer toward the fluid to be heated.

This feature is particularly advantageous if the system is to be fed in a manual manner (as done in case of a solid fuel, or for domestic units), as it allows supplying hot air even for several hours following the combustion of the fuel charge.

An additional feature of the invention is to utilise two concentric tubes 22 and 23 (usually of a length of several meters) to conduct the exhaust gases and air previously heated in the hollow spaces 13.

It has been verified that this feature allows achieving a substantial boost in the system's overall performance.

The considerable energy savings attained thanks to this feature are therefore readily apparent.

In one potential form of execution (not shown here), the ash collector is fitted with a projecting flap on which the user may pour a small amount of flammable material (alcohol, for example) to prime the combustion process.

A further form of execution of the invention includes the use of a smoke extractor 25, positioned for example on the exhaust gas conduit 29.

The extractor 25 will typically consist of a fan 26 to pick up the waste gases rising from the lower end of the conduit 29 and to reintroduce them higher up, in a direction essentially parallel to that of the motion of the waste gases.

The action of the fan 26 may be manual or automatic.

In one potential form of execution, the action of the fan 26 may be governed by the opening of a gate 30 designed to feed the combustion chamber from above. This can avoid any troublesome phenomena of a presence of smoke in the room housing the system.

The gate may be opened by an appropriate linkage 31 actuated by a foot pedal 32, so as to conveniently allow the operator to keep his hands free.

This linkage 30 may be fitted along the oven's exterior walls or pass through a suitable enclosure.

Suitable gaskets 3 may be provided in this case, so as to reduce any hot air leakages.

Based on the guidelines provided in this document, a specialist in the trade may also apply numerous variants and modifications, all falling within the scope of this inventive concept.

In particular, the shapes, sizes and types of materials used may vary depending on the needs and circumstances.

The reference numbers used in the enclosed claims are solely designed to enhance the understanding of the claims themselves, and are in no way intended to serve a limiting purpose.

## Claims

1. A fuel-fired heating system (1) of a type used for generating hot air, characterised by the fact of also providing a heat exchanger (22, 23) to recover heat from waste combustion gases.

2. A system (1) according to the claim 1, in which said heat exchanger includes two concentric tubes (22, 23) destined for passing waste gases and warm air, respectively.

3. A system (1) according to the claims 1 or 2, characterised by the fact that at least one of the walls (2) comprises an internal wall (2b) and an external wall (2a), where the said walls (2a, 2b) are detached from each other so as to form an empty space utilised for passing the air to be heated.

4. A system (1) according to the claim 3, characterised by the fact that the external walls (2a) are fitted on the side of the empty space (19) with a refractory material such as to enhance its thermal capacity.

5. A fuel-fired heating system (1) characterised by the fact that the juncture of the walls (2, 3, 4) is achieved by connecting pins or studs (9) designed to allow relative motions along an axis parallel to the axis of said studs (9).

6. A system (1) according to the claim 5, characterised by the fact that the said studs (9) are parallel to the larger dimension of the walls (2, 3, and 4).

7. A system (1) according to the claims 5 or 6, characterised by the fact that the mentioned studs are mounted with a free play, so as to compensate any motions at a right angle to the axis of the studs (9).

8. A system (1) according to the claims 5 or 6 or 7, characterised by the fact that the contact surface between the walls (2, 3, 4) exhibits a toothed profile (13, 14) so as to improve the tightness, while said toothed profile extends in a direction parallel to that of the axis of the studs (9).

9. A system (1) according to the claims 8, characterised by the fact that said toothed profile has a free play allowing relative motions in a direction at a right angle to the axis of the studs (9).

10. A heating system (1) characterised by the fact that it includes a waste gas extractor (25), said extractor being fitted into the initial section of the waste gas discharge conduit (29).

11. A system (1) according to the claims 10, characterised by the fact that the waste gases picked up by the extractor are reintroduced in a direction essentially parallel to that of the discharge conduit (29).

12. A system (1) according to the claims 10 or 11, characterised by the fact that said extractor (25) is actuated by the opening of a gate (30) used for charging the combustion chamber.

13. A system (1) according to the claim 12, characterised by the fact that the opening of said gate (30) is achieved by a linkage 31 governed by a foot pedal (32).

14. A system (1) according to any of the foregoing claims, characterised by the fact that the ash collector is equipped with a projecting flap on which the user may pour some flammable material to prime the combustion.

15. A system (1) according to any of the claims from 1 to 4 and/or any of the claims from 5 to 9 and/or any of the claims from 10 to 14.

16. A fuel-fired heating system, as described and pictured.
